# FASCICULE DE BREVET EUROPEEN

(11) **EP 0 707 399 B1**
(45) Date de publication et mention de la délivrance du brevet: **29.08.2001**
(21) Numéro de dépôt: 95402237.2
(22) Date de dépôt: 06.10.1995
(51) Int. Cl.: H04L 12/56, H04Q 11/04

(54) **Procédé et dispositif pour le contrôle de congestion dans un réseau de communication de paquets**
Verfahren und Vorrichtung zur Überlastregelung in einem Paketkommunikationsnetz
Method and device for congestion control in a packet communication network

(30) Priorité: 11.10.1994 FR 9412105
(43) Date de publication de la demande: 17.04.1996
(73) Titulaire: THOMSON-CSF, 75008 Paris (FR)
(72) Inventeur: Lagoutte, Pierre, F-92402 Courbevoie Cédex (FR); Grenot, Thierry, F-92402 Courbevoie Cédex (FR)
(74) Mandataire: Lincot, Georges

(56) Documents cités:
- INTERNATIONAL SWITCHING SYMPOSIUM 1992. 'DIVERSIFICATION AND INTEGRATION OF NETWORKS AND SWITCHING TECHNOLOGIES TOWARDS THE 21ST CENTURY' PROCEEDINGS, YOKOHAMA, JAPAN, 25-30 OCT. 1992, 1992, TOKYO, JAPAN, INST. ELECTRON. INF. COMMUN. ENG, JAPAN, pages 229-233 vol.1, XP 000337649 CHAO H J 'A general architecture for link-layer congestion control in ATM networks'
- IEEE IN HOUSTON. GLOBECOM '93. IEEE GLOBAL TELECOMMUNICATIONS CONFERENCE, INCLUDING A COMMUNICATIONS THEORY MINI-CONFERENCE. TECHNICAL PROGRAM CONFERENCE RECORD (CAT. NO.93CH3250-8), PROCEEDINGS OF GLOBECOM '93. IEEE GLOBAL TELECOMMUNICATIONS CONFERE, ISBN 0-7803-0917-0, 1993, NEW YORK, NY, USA, IEEE, USA, pages 719-723 vol.2, XP 000427904 NEWMAN P 'Backward explicit congestion notification for ATM local area networks'
- ICC 91. INTERNATIONAL CONFERENCE ON COMMUNICATIONS CONFERENCE RECORD (CAT. NO.91CH2984-3), DENVER, CO, USA, 23-26 JUNE 1991, ISBN 0-7803-0006-8, 1991, NEW YORK, NY, USA, IEEE, USA, pages 180-187 vol.1, XP 000269399 CHAO H J 'Design of leaky bucket access control schemes in ATM networks'

## Description

La présente invention concerne un procédé et un dispositif pour le contrôle de congestion des échanges sporadiques de paquets de données dans un réseau de transmission numérique. Elle s'applique notamment à la réalisation de réseaux locaux fonctionnant dans le mode de transmission connue sous l'abréviation anglo-saxonne ATM de "Asynchronous Transfert Mode".

Dans un réseau fonctionnant en mode ATM, les informations numériques sont échangées entre des noeuds du réseau sous forme de paquets de bits de format fixe appelés "cellules". Chaque cellule se compose, d'une part, d'un entête servant à identifier la cellule et la communication à laquelle elle appartient et, d'autre part, d'un champ d'information contenant les données utiles à véhiculer. Les noeuds du réseau ont la charge d'aiguiller les cellules ATM appliquées à leurs entrées vers une ou plusieurs sorties.

Dans ces réseaux, les utilisateurs actifs, en cours de communication, se partagent la bande passante disponible selon différents modes de fonctionnement. Un premier mode est de réserver une portion de la bande passante à chaque utilisateur actif, qu'il émette ou non (réservation de débit crête, par exemple). Mais alors, la portion de bande réservée et non utilisée par les utilisateurs actifs qui n'émettent pas, ne peut pas être attribuée aux autres utilisateurs. Une autre façon de procéder est de ne pas réserver de ressources dans le réseau, celui-ci se chargeant de réaliser le multiplexage statistique des informations réellement transmises. Cependant, il est possible qu'à un instant donné, les utilisateurs émettent plus d'information que le réseau ne sait en écouler, ce qui se traduira par une perte d'une partie de ces informations (phénomène de congestion). Pour éviter que ce phénomène de congestion du réseau ainsi produit ne perturbe la totalité du réseau, un procédé de régulation connu sous l'abréviation anglo-saxonne ABR de "Available Bit Rate" peut être mis en oeuvre. Ce procédé permet le partage effectif de la bande passante disponible entre les utilisateurs actifs, en évitant la congestion du réseau.

Des mécanismes connus sous les abréviations anglo-saxonnes FECN et BECN de Forward Explicit Congestion Notification et Backward Explicit Congestion Notification sont alors appliqués. Ils permettent de bloquer les sources actives lorsque le réseau commence à ne plus pouvoir écouler tout le trafic qui lui est confié. Un mécanisme de déblocage associé permet d'éviter le blocage permanent de ces sources.

Cependant, dans certains cas d'anomalies, par exemple la déconnexion des câbles de liaison, ou la défaillance des composants constituant les noeuds, il se peut que des sources ne reçoivent pas les informations de congestion et continuent d'émettre et donc de congestionner le réseau ; il se peut également que des sources bloquées ne reçoivent pas l'information de déblocage, et restent bloquées pendant un temps très long, ce qui est préjudiciable aux applications qui l'utilisent.

Le document ayant pour titre "A general architecte for link-layer congestion control in ATM networks et pour auteur CHAO HJ, publié dans la revue Inst. Electron Inf. Commun Eng., Japon, 25-30 oct.1992, Tokyo, divulgue un procédé et un dispositif permettant de réguler et/ou de stopper l'émission de cellules dans un réseau. Lorsque la longueur de la file dépasse un niveau de seuil prédéterminé, indiquant qu'un noeud est dans un état de congestion, des indicateurs de congestion sont transmis à travers l'ensemble de commutateurs situé en amont. L'indicateur peut être transmis jusqu'à la source.

Le but de l'invention est de pallier les inconvénients précités.

A cet effet, l'invention a pour objet un procédé pour le contrôle de congestion des échanges sporadiques de paquets de données dans un réseau de transmission numérique, ledit réseau de transmission comportant plusieurs noeuds, chaque paquet ou cellule étant composé d'un en-tête permettant de l'identifier et de le guider à travers des canaux virtuels (VCI) et d'une partie contenant des informations à véhiculer.

Il est caractérisé en ce qu'il comporte au moins les étapes suivantes :
- au niveau de chaque noeud du réseau, détecter les canaux virtuels en congestion en comparant la hauteur de la file d'attente à un niveau de seuil haut (SH),
- positionner un indicateur de congestion de type 1 (IC) au niveau de chacun des noeuds se trouvant dans un état de congestion et pour chaque canal virtuel concerné par la congestion, et émettre ledit indicateur de congestion de type 1 vers un ou plusieurs noeuds situés en amont correspondant à chacun des canaux virtuels concernés par la congestion,
- à la réception de l'indicateur de type 1 dans un noeud, positionner à une valeur donnée un indicateur de congestion de type 2 associé à un canal virtuel congestionné et décrémenter ladite valeur de façon cyclique tant que la valeur est différente de sa valeur minimale,
- pour chaque canal virtuel associé à un indicateur de congestion de type 2, bloquer l'émission des cellules tant que l'indicateur de congestion de type 2 est différent de sa valeur minimale,
- lorsque la hauteur de la file d'attente atteint un niveau de seuil bas (SB), positionner l'indicateur de congestion de type 1 dans un état « non congestionné » et positionner l'indicateur de congestion de type 2 à sa valeur minimale.

L'invention concerne aussi un dispositif pour le contrôle de congestion des échanges sporadiques de paquets de données dans un réseau de transmission numérique, chaque paquet de données étant composé d'un en-tête permettant de l'identifier et de le guider à travers des canaux virtuels et d'une partie contenant des informations à véhiculer, le réseau de transmission numérique étant composé de noeuds de transmission communiquant entre eux sur des artères de transmission. Il est caractérisé en ce qu'il comporte dans chacun des noeuds du réseau :
- un circuit de brassage pour distribuer sur des artères sortantes les paquets de données appliquées sur les artères entrantes du noeud de transmission et un ensemble de registres interposés entre le brasseur et les artères sortantes pour placer les paquets de données à transmettre en file d'attente, lesdites registres comportant un capteur de remplissage de la file comportant un niveau de seuil haut (SH) et un niveau de seuil bas (SB), afin de déterminer les canaux virtuels en congestion,
- des moyens qui permettent au niveau de chacun des noeuds dans un état de congestion de positionner et de mémoriser un indicateur de congestion de type 1 pour chaque canal virtuel dans un état de congestion,
- des moyens d'émission dudit indicateur de congestion vers un ou plusieurs noeuds situés en amont correspondant à chaque canal virtuel concerné par la congestion,
- des moyens pour mettre à une valeur donnée un indicateur de congestion de type 2, associé à un canal virtuel congestionné, à la réception de l'indicateur de congestion de type 1 dans un noeud,
- des moyens qui permettent de décrémenter la valeur de l'indicateur de congestion de type 2 tant que sa valeur est différente de sa valeur minimale,
- des moyens pour bloquer l'émission des cellules au niveau d'un noeud pour chaque canal virtuel associé à un indicateur de congestion de type 2 différent de sa valeur minimale.

D'autres caractéristiques et avantages de l'invention apparaîtront dans la description qui suit faite en regard des dessins annexés qui représentent :
- la figure 1, un exemple pour illustrer une communication dans un réseau ATN ;
- la figure 2, le format d'un entête de cellule ATM ;
- la figure 3, un mode de réalisation d'un automate câblé pour la mise en oeuvre dans chaque noeud du réseau du procédé selon l'invention ;
- la figure 4, un exemple pour illustrer le principe d'une communication selon l'invention sur plusieurs noeuds en cascade.

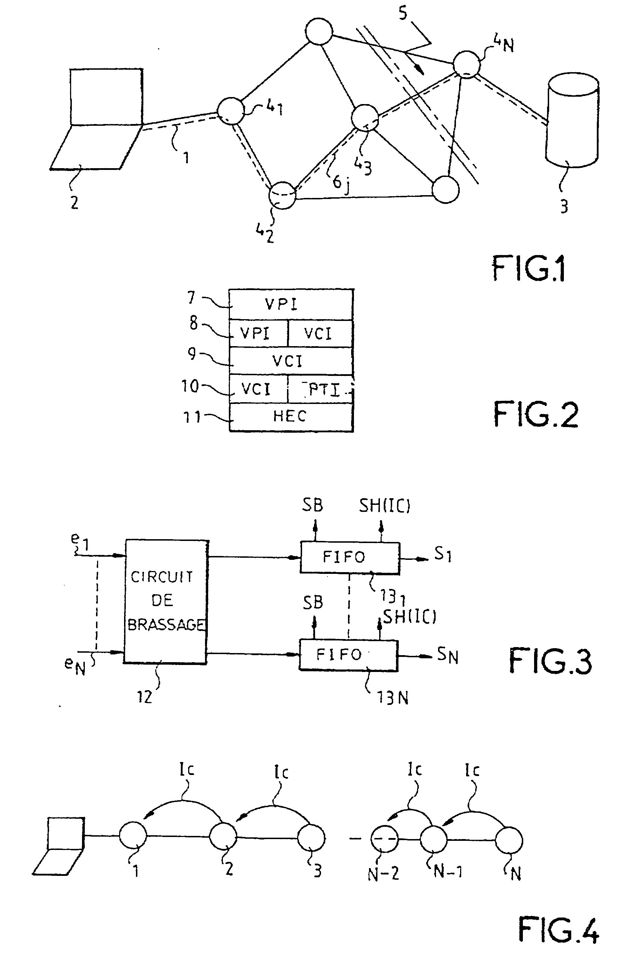

Dans l'exemple de la figure 1, le chemin pris par une communication entre un utilisateur 2 et un terminal de données 3 est illustré par une ligne en pointillés 1. Le chemin suivant la ligne 1 est formé par une mise en cascade de noeuds de communications 4₁ à 4_{N} d'un réseau local ATM 5 communiquant entre eux sur des artères 6ⱼ.

Les informations échangées sur les artères 6j sont fournies par des paquets de bits de format fixe appelés "cellules". Chaque cellule se compose d'un champ d'information et d'un entête permettant d'identifier la cellule et notamment à la communication à laquelle elle appartient. Le rôle des noeuds 4₁ à 4_{N} est d'aiguiller les cellules arrivant sur leurs entrées vers une ou plusieurs de leurs sorties.

A cet effet, l'entête de chaque cellule comporte comme le montre l'exemple de la figure 2, quatre zones VPI, VCI, PTI et HEC réparties dans un bloc de 5 octets de 8 bits chacun et référencés de 7 à 11. Un octet et demi est réservé au codage du faisceau virtuel VPI auquel appartient la cellule.

Deux octets sont réservés au codage du canal virtuel VCI auquel appartient la cellule. La zone PTI comporte 4 bits dont l'usage n'est pas défini ici. Enfin la zone HEC comporte un octet réservé pour générer un code de contrôle d'erreur.

Chaque noeud comporte de la manière représentée à la figure 3, un circuit de brassage 12 du type de celui qui est décrit par exemple dans les demandes de brevet FR 2 635 243 ou FR 2 635 242. Le rôle du circuit de brassage 12 est d'aiguiller les cellules entrantes sur ses entrées e₁--e_{N} sur les artères de sortie du noeud en fonction des informations VPI et VCI contenues dans chaque entête. L'aiguillage a lieu de façon connue et telle que décrite par exemple dans la demande de brevet 2 681 164 en utilisant un traducteur. Le traducteur donne pour chaque cellule un nouvel entête et une artère sortante en fonction de l'entête qu'elle possède à son entrée dans le noeud et de l'artère qui l'a véhiculée. Le circuit de brassage 12 est relié aux artères sortantes par l'intermédiaire de registres 13₁ à 13_{N} organisés en pile. Ces registres placent les cellules à transmettre sur chacune des artères sortantes S₁--S_{N} du noeud dans une file d'attente. A cette fin, chaque file d'attente est organisée dans un registre 13ᵢ suivant le mode "FIFO" de l'abréviation anglo-saxonne "FIRST IN FIRST OUT". Pour la mise en oeuvre de l'invention, les registres 13i comportent de façon connue un capteur de remplissage à deux seuils, un seuil haut désigné par SH et un seuil bas désigné par SB.

Lorsque la hauteur de la file d'attente de l'une des directions de sortie du noeud atteint ou dépasse le seuil haut SH, pour chaque canal virtuel (identifié par exemple par le champ VCI des cellules qu'il transmet) sur lequel arrive une cellule, on positionne un indicateur de type booléen de congestion de type 1, par exemple dans le traducteur (qui signale donc en interne que la sortie qui est emprunté par le canal virtuel considéré est en voie de congestion). Cette information est également émise vers le noeud amont correspondant au canal logique sur lequel on a reçu la cellule, sous la forme d'un indicateur de congestion IC, par exemple par l'intermédiaire d'une cellule émise spécifiquement à cet effet.

La réception de l'indicateur de congestion IC dans un noeud provoque la mise à la valeur maximum d'un indicateur (par exemple de type entier naturel) de congestion de type 2, associé (par exemple dans le traducteur) au canal virtuel ayant rencontré la congestion de type 1 dans le noeud aval. Cet indicateur signale donc que le chemin est saturé en aval. Chaque noeud émet de façon cyclique vers l'amont la valeur des indicateurs de congestion IC (positionné ou non) correspondant à chacun des canaux logiques. Chaque noeud décrémente de façon cyclique les indications de congestion de type 2 dont la valeur est non nulle (par exemple). Les cellules appartenant à un canal logique dont l'indicateur de type 2 n'est pas à la valeur 0 (par exemple) sont bloquées. Lorsque la file d'attente d'un noeud congestionné redescend au niveau du seuil bas SB, l'indicateur de congestion de type 1 est positionné à "non congestionné". Ce changement d'état est transmis vers les noeuds amont, qui positionnent alors le compteur de congestion de type 2 à sa valeur minimale (par exemple 0).

L'indicateur de congestion IC est ensuite propagé de proche en proche de la manière représentée à la figure 4 sur l'ensemble des noeuds amonts par où a été transmis la cellule afin d'être mémorisée dans chacune des zones VCᵢ des traducteurs correspondants.

Cette mémorisation permet le signalement dans les noeuds du réseau des canaux virtuels en congestion qui leur sont rattachés.

Une variante consiste pour un noeud donné à informer cycliquement les noeuds amont non seulement de l'état de congestion de type 1 (IC) tel que décrit plus haut, mais aussi de l'état de congestion de type 2, de telle façon que les dits noeuds amont bloquent à leur tour le trafic sur les canaux logiques concernés.

## Revendications

1. Procédé pour le contrôle de congestion des échanges sporadiques de paquets de données dans un réseau (5) de transmission numérique, ledit réseau de transmission comportant plusieurs noeuds (4₁...4_{N}), chaque paquet ou cellule étant composé d'un en-tête (7-11) permettant de l'identifier et de le guider à travers des canaux virtuels (VCI) et d'une partie contenant des informations à véhiculer **caractérisé en ce qu**'il comporte au moins les étapes suivantes :
• au niveau de chaque noeud du réseau, détecter les canaux virtuels en congestion en comparant la hauteur de la file d'attente à un niveau de seuil haut (SH),
• positionner un indicateur de congestion de type 1 (IC) au niveau de chacun des noeuds se trouvant dans un état de congestion et pour chaque canal virtuel concerné par la congestion, et émettre ledit indicateur de congestion de type 1 vers un ou plusieurs noeuds situés en amont correspondant à chaque canal logique concerné par la congestion,
• à la réception de l'indicateur de type 1 dans un noeud, positionner à une valeur donnée un indicateur de congestion de type 2 associé à un canal virtuel congestionné et décrémenter ladite valeur de façon cyclique tant que la valeur est différente de sa valeur minimale,
• pour chaque canal virtuel associé à un indicateur de congestion de type 2, bloquer l'émission des cellules tant que l'indicateur de congestion de type 2 est différent de sa valeur minimale,
• lorsque la hauteur de la file d'attente atteint un niveau de seuil bas (SB), positionner l'indicateur de congestion de type 1 dans un état « non congestionné » et positionner l'indicateur de congestion de type 2 à sa valeur minimale.

2. Procédé selon la revendication 1 **caractérisé en ce que** ledit indicateur de congestion de type 1 est émis de manière cyclique.

3. Procédé selon la revendication 1 **caractérisé en ce que** la valeur minimale de l'indicateur de type 2 est égale à 0.

4. Procédé selon la revendication 1 **caractérisé en ce qu**'il comporte une étape où les indicateurs de congestion de type 1 et de type 2 sont émis à partir d'un noeud dans un état de congestion vers les noeuds disposés en amont afin de bloquer l'émission au niveau desdits noeuds amont.

5. Dispositif pour le contrôle de congestion des échanges sporadiques de paquets de données dans un réseau de transmission numérique, chaque paquet de données étant composé d'un en-tête (7-11) permettant de l'identifier et de le guider à travers des canaux virtuels et d'une partie contenant des informations à véhiculer, le réseau de transmission numérique étant composé de noeuds de transmission communiquant entre eux sur des artères de transmission (6j), **caractérisé en ce qu**'il comporte dans chacun des noeuds (4₁, 4₂,.....4_{N}) du réseau :
• un circuit de brassage (12) pour distribuer sur des artères sortantes les paquets de données appliquées sur les artères entrantes du noeud de transmission et un ensemble de registres (13₁, 13₂,.....13_{N}) interposés entre le brasseur et les artères sortantes pour placer les paquets de données à transmettre en file d'attente, lesdites registres comportant un capteur de remplissage de la file comportant un niveau de seuil haut (SH) et un niveau de seuil bas (SB), afin de déterminer les canaux virtuels en congestion,
• des moyens qui permettent au niveau de chaque noeud dans un état de congestion de positionner et de mémoriser un indicateur de congestion de type 1 pour chaque canal virtuel concerné par la congestion,
• des moyens d'émission dudit indicateur de congestion de type 1 vers un ou plusieurs noeuds situés en amont correspondant à chaque canal virtuel concerné par la congestion,
• des moyens pour mettre à une valeur donnée un indicateur de congestion de type 2, associé à un canal virtuel congestionné, à la réception de l'indicateur de congestion de type 1 dans un noeud,
• des moyens qui permettent de décrémenter la valeur de l'indicateur de congestion de type 2 tant que sa valeur est différente de sa valeur minimale,
• des moyens pour bloquer l'émission des cellules au niveau d'un noeud pour chaque canal virtuel associé à un indicateur de congestion de type 2 différent de sa valeur minimale.

6. Dispositif selon la revendication 5 **caractérisé en ce que** ledit compteur positionne l'indicateur de congestion de type 2 à sa valeur minimale lorsque l'indicateur de congestion de type 1 reçu du canal virtuel aval est positionné dans un état de 'non congestion'.

7. Dispositif selon l'une des revendications 5 à 6, **caractérisé en ce que** chaque noeud (4₁ - 4_{N}) comprend un traducteur pour la mise à jour de l'entête (4-11) des paquets de données à transmettre et inscrire les canaux virtuels en congestion au reçu d'indicateur de congestion (IC) fourni par les capteurs de remplissage, (SH) des noeuds placés en aval.

## Patentansprüche

1. Verfahren zur Überlastungskontrolle beim sporadischen Austausch von Datenpaketen in einem digitalen Übertragungsnetz (5), das mehrere Knoten (4₁ ... 4_{N}) enthält, wobei jedes Paket oder jede Zelle aus einem Vorspann (7 bis 11) zur Identifizierung und Weiterleitung über virtuelle Kanäle (VCI) und aus einem die zu übertragenden Informationen enthaltenden Teil besteht, **dadurch gekennzeichnet**, daß es mindestens die folgenden Verfahrensschritte enthält:
• In Höhe jedes Knotens des Netzes werden die überlasteten virtuellen Kanäle erfaßt, indem die Länge der Warteschlange mit einem oberen Schwellwert (SH) verglichen wird;
• ein Überlastungsindikator (IC) des Typs 1 wird in Höhe jedes der Knoten gesetzt, die sich in einem Überlastungszustand befinden, und zwar für jeden von der Überlastung betroffenen virtuellen Kanal, und der Überlastungsindikator des Typs 1 wird an einen oder mehrere eingangsseitig anschließende Knoten entsprechend jedem von der Überlastung betroffenen logischen Kanal ausgesendet;
• beim Empfang des Indikators des Typs 1 in einem Knoten wird ein Überlastungsindikator des Typs 2, der einem überlasteten virtuellen Kanal zugeordnet ist, auf einen bestimmten Wert gesetzt, und dieser Wert wird zyklisch dekrementiert, so lange er sich von seinem Mindestwert unterscheidet;
• für jeden einem Überlastungsindikator des Typs 2 zugeordneten virtuellen Kanal wir die Aussendung blockiert, so lange der Überlastungsindikator des Typs 2 sich von seinem Mindestwert unterscheidet;
• sobald die Länge der Warteschlange einen unteren Schwellwert (SB) erreicht, wird der Überlastungsindikator des Typs 1 in einen Zustand "nicht überlastet" und der Überlastungsindikator des Typs 2 auf seinen Mindestwert gesetzt.

2. Verfahren nach Anspruch 1, **dadurch gekennzeichnet**, daß der Überlastungsindikator des Typs 1 zyklisch ausgesendet wird.

3. Verfahren nach Anspruch 1, **dadurch gekennzeichnet**, daß der Mindestwert des Indikators des Typs 2 null ist.

4. Verfahren nach Anspruch 1, **dadurch gekennzeichnet**, daß es einen Verfahrensschritt aufweist, in dem die Überlastungsindikatoren des Typs 1 und des Typs 2 ausgehend von einem überlasteten Knoten an die eingangsseitig anschließenden Knoten ausgesendet werden, um die Aussendung von Informationen durch diesen eingangsseitig anschließenden Knoten zu blockieren.

5. Vorrichtung zur Überlastungskontrolle für den sporadischen Austausch von Datenpaketen in einem digitalen Übertragungsnetz, wobei jedes Datenpaket von einem Vorspann (7 - 11) zur Identifizierung und zur Weiterleitung über virtuelle Kanäle und von einem die zu übertragenden Informationen enthaltenden Teil gebildet wird und das digitale Übertragungsnetz aus Übertragungsknoten besteht, die miteinander über Übertragungskanäle (6ⱼ) Daten austauschen, **dadurch gekennzeichnet**, daß sie in jedem der Knoten (4₁, 4₂, ..., 4_{N}) des Netzes aufweist:
• eine Verteilschaltung (12), um die an die ankommenden Kanäle des Knotens angelegten Datenpakete auf ausgehende Kanäle zu verteilen, und eine Gruppe von Registern (13₁, 13₂, ..., 13_{N}), die zwischen der Verteilschaltung und den Ausgangskanälen liegen, um die zu übertragenden Datenpakete in eine Warteschlange zu bringen, wobei die Register einen Füllstandsdetektor für die Schlange mit einem oberen Schwellwert (SH) und einem unteren Schwellwert (SB) aufweisen, um die überlasteten virtuellen Kanäle zu bestimmen;
• Mittel, die in Höhe jedes überlasteten Knotens einen Überlastungsindikator des Typs 1 für jeden von der Überlastung betroffenen virtuellen Kanal setzen und speichern können;
• Mittel, um den Überlastungsindikator des Typs 1 an einen oder mehrere eingangsseitig anschließende Knoten für jeden von der Überlastung betroffenen virtuellen Kanal zu senden;
• Mittel, um einen Überlastungsindikator des Typs 2, der einem überlasteten virtuellen Kanal zugeordnet ist, bei Empfang des Überlastungsindikators des Typs 1 in einem Knoten auf einen bestimmten Wert zu setzen;
• Mittel, die den Wert des Überlastungsindikators des Typs 2 dekrementieren können, so lange dieser Wert sich von seinem Mindestwert unterscheidet;
• Mittel, die die Aussendung der Zellen in Höhe eines Knotens für jeden einem Überlastungsindikator des Typs 2 mit einem Wert ungleich seinem Mindestwert zugeordneten Kanal blockieren.

6. Vorrichtung nach Anspruch 5, **dadurch gekennzeichnet**, daß der Zähler den Überlastungsindikator des typs 2 auf seinen Mindestwert setzt, wenn der Überlastungsindikator des Typs 1, der vom ausgangsseitig angeschlossenen virtuellen Kanal kommt, in einen "nicht-überlasteten" Zustand gebracht ist.

7. Vorrichtung nach einem der Ansprüche 5 und 6, **dadurch gekennzeichnet**, daß jeder Knoten (4₁ bis 4_{N}) einen Übersetzer für die Aktualisierung des Vorspanns (7 bis 11) der zu übertragenden Datenpakete und zum Einschreiben der überlasteten virtuellen Kanäle beim Empfang eines von den Füllstandsdetektoren (SH) der ausgangsseitig angeschlossenen Knoten gelieferten Überlastungsindikatoren (IC) zu speichern.

## Claims

1. Method for controlling congestion of sporadic exchanges of data packets in a digital transmission network (5), the said transmission network comprising several nodes (4₁...4_{N}), each packet or cell being composed of a header (7-11) enabling it to be identified and to be guided through virtual channels (VCI) and of a part containing information to be conveyed, **characterized in that** it comprises at least the following steps:
• at the level of each node of the network, detecting the congested virtual channels by comparing the height of the queue with a top threshold level (SH),
• setting a type 1 congestion indicator (IC) at the level of each of the nodes exhibiting a state of congestion and for each virtual channel affected by the congestion, and transmitting the said type 1 congestion indicator to one or more nodes situated upstream corresponding to each logical channel affected by the congestion,
• on receiving the type 1 indicator in a node, setting to a given value a type 2 congestion indicator associated with a congested virtual channel and decrementing the said value cyclically as long as the value is different from its minimum value,
• for each virtual channel associated with a type 2 congestion indicator, blocking the transmission of the cells as long as the type 2 congestion indicator is different from its minimum value,
• when the height of the queue reaches a bottom threshold level (SB), setting the type 1 congestion indicator to a "noncongested" state and setting the type 2 congestion indicator to its minimum value.

2. Method according to Claim 1, **characterized in that** the said type 1 congestion indicator is transmitted cyclically.

3. Method according to Claim 1, **characterized in that** the minimum value of the type 2 indicator is equal to 0.

4. Method according to Claim 1, **characterized in that** it comprises a step in which the type 1 and type 2 congestion indicators are transmitted from a node in a state of congestion to the nodes disposed upstream so as to block the transmission at the level of the said upstream nodes.

5. Device for controlling congestion of sporadic exchanges of data packets in a digital transmission network, each data packet being composed of a header (7-11) enabling it to be identified and to be guided through virtual channels and of a part containing information to be conveyed, the digital transmission network being composed of transmission nodes communicating with one another over transmission highways (6j), **characterized in that** it comprises in each of the nodes (4₁, 4₂,...4_{N}) of the network:
• a shuffling circuit (12) for distributing over outgoing highways the data packets applied on the incoming highways entering the transmission node and a set of registers (13₁, 13₂,...13_{N}) interposed between the shuffler and the outgoing highways so as to queue the data packets to be transmitted, the said registers comprising a queue fill sensor comprising a top threshold level (SH) and a bottom threshold level (SB), so at to determine the congested virtual channels,
• means which make it possible at the level of each node in a state of congestion to set and to store a type 1 congestion indicator for each virtual channel affected by the congestion,
• means for transmitting the said type 1 congestion indicator to one or more nodes situated upstream corresponding to each virtual channel affected by the congestion,
• means for positioning a type 2 congestion indicator to a given value, this indicator being associated with a congested virtual channel, on receiving the type 1 congestion indicator in a node,
• means which make it possible to decrement the value of the type 2 congestion indicator as long as its value is different from its minimum value,
• means for blocking the transmission of the cells at the level of a node for each virtual channel associated with a type 2 congestion indicator different from its minimum value.

6. Device according to Claim 5, **characterized in that** the said counter sets the type 2 congestion indicator to its minimum value when the type 1 congestion indicator received from the downstream virtual channel is set to a state of "noncongestion".

7. Device according to one of Claims 5 to 6, **characterized in that** each node (4₁, - 4_{N}) comprises a translator for updating the header (4-11) of the data packets to be transmitted and to record the congested virtual channels on receipt of congestion indicator (IC) provided by the fill sensors, (SH) of the nodes stationed downstream.
